# EUROPEAN PATENT APPLICATION

(11) **EP 2 495 982 A1**
(43) Date of publication of application: **05.09.2012**
(21) Application number: 10826265.0
(22) Date of filing: 30.08.2010
(51) Int. Cl.: H04N 13/04, G02B 27/22, G09G 5/36

(54) **THREE-DIMENSIONAL DISPLAY DEVICE, THREE-DIMENSIONAL DISPLAY SYSTEM, AND THREE-DIMENSIONAL DISPLAY METHOD**

(30) Priority: 27.10.2009 JP 2009246155
(71) Applicant: Panasonic Corporation, Kadoma-shi Osaka 571-8501 (JP)
(72) Inventor: MIYAUCHI, Shingo, Osaka 540--6207 (JP); HASEGAWA, Takao, Osaka 540--6207 (JP); KASE, Daisuke, Osaka 540--6207 (JP)
(74) Representative: Grünecker, Kinkeldey, Stockmair & Schwanhäusser
(86) International application number: PCT/JP2010/005319
(87) International publication number: WO 2011/052125

(57) **Abstract**

A three-dimensional display device includes display unit (130) for displaying left- and right-eye images alternately; and transmission control unit (140) for transmitting a synchronizing signal indicating a timing for starting to display the left-eye image or the right-eye image on display unit (130), intermittently at a given transmission timing. Transmission control unit (140) changes the given transmission timing according to a given condition and transmits the synchronizing signal.

## Description

### TECHNICAL FIELD

The present invention relates to a three-dimensional display technology in which images displayed on a three-dimensional display device are viewed through shutter glasses, particularly to synchronization between display of left and right parallax images and open/close of the shutters of shutter glasses.

### BACKGROUND ART

In recent years, three-dimensional display systems have been achieving widespread use as one image display technology. The system, which includes an image display device and shutter glasses, controls open/close of the left- and right-eye shutters disposed on the glasses synchronously with left- and right-eye images separately displayed on the image display device to provide stereoscopic images.

In this three-dimensional display system, it is an important technology to open and close the shutters of shutter glasses synchronously with display of left- and right-eye images, which means that the display quality of stereoscopic images directly depends on the quality of control technology related to opening and closing of shutters.

Examples of the conventional control technology related to opening and closing of shutters include patent literatures 1 through 3, for example. One relates to timing control of start and stop of shutter control; one relates to excluding unstable information by checking the reception quality of a shutter control signal; and one relates to detecting a synchronizing signal of an image to produce shutter control information.

In the above-described conventional technologies, however, communications for synchronizing a display image with shutter glasses interfere with communications between the image display device and another device such as a remote control and wireless headphones, possibly causing a malfunction. Meanwhile, change and fluctuation in display images such as switching between two-dimensional images (plane display) and three-dimensional images (solid display) and switching channels possibly cause out-of-synchronization in a shutter control signal transmitted to shutter glasses, preventing stable stereoscopic images from being viewed.

To solve the above problem, the following method has been devised. That is, communications for synchronizing a display image with shutter glasses are intermittently performed at given intervals (longer than those for display switching between left and right parallax images) to reduce interferences between the image display device and another device.

Even the above method, however, is unable to completely avoid interferences. Further, communications for synchronization are performed at given intervals, and thus the method is unable to handle out-of-synchronization in a shutter control signal due to change and fluctuation in display images such as channel switching.

### Citation List

### Patent Literature

**PTL 1** Japanese Patent Examined Publication No. H06-59108
**PTL 2** Japanese Patent No. 3448467
**PTL 3** Japanese Patent Unexamined Publication No. 2001-320734

### SUMMARY OF THE INVENTION

A three-dimensional display device of the present invention includes a display unit for alternately displaying left- and right-eye images; and synchronizing signal transmitting unit for transmitting a synchronizing signal indicating a display start timing to the display unit intermittently at a given transmission timing. The display device is characterized in that the transmitting unit changes the given transmission timing according to a given condition and transmits the synchronizing signal. Such a configuration enables a transmission timing of a synchronizing signal to be changed according to a given condition. Hence, the display device can transmit a synchronizing signal while avoiding a timing (e.g. when a synchronizing signal interferes with other signals, when a synchronizing signal is disturbed) causing deterioration of the quality of a synchronizing signal. Herewith, the present invention provides a three-dimensional display device with high stability and quality without being affected by a communication environment or change and fluctuation in the display screen.

### BRIEF DESCRIPTION OF DRAWINGS

FIG. 1A is a perspective view showing the appearance of a three-dimensional display device composing a three-dimensional display system according to the first exemplary embodiment of the present invention.
FIG. 1B is a perspective view showing the appearance of shutter glasses composing the three-dimensional display system according to the first exemplary embodiment of the present invention.
FIG. 2 is a block diagram showing the main hardware configuration of the three-dimensional display system according to the first exemplary embodiment of the present invention.
FIG. 3 is a block diagram of the detecting section of the three-dimensional display system according to the first exemplary embodiment of the present invention.
FIG. 4 is a timing diagram showing open/close operation of the shutters, in the three-dimensional display system according to the first exemplary embodiment of the present invention.
FIG. 5 is a timing diagram showing synchronous control when a specific event occurs, in the three-dimensional display system according to the first exemplary embodiment of the present invention.
FIG. 6 is a timing diagram showing synchronous control when an interference signal is detected, in the three-dimensional display system according to the first exemplary embodiment of the present invention.
FIG. 7 is a flowchart showing synchronous control in the three-dimensional display system according to the first exemplary embodiment of the present invention.

### DESCRIPTION OF EMBODIMENTS

### FIRST EXEMPLARY EMBODIMENT

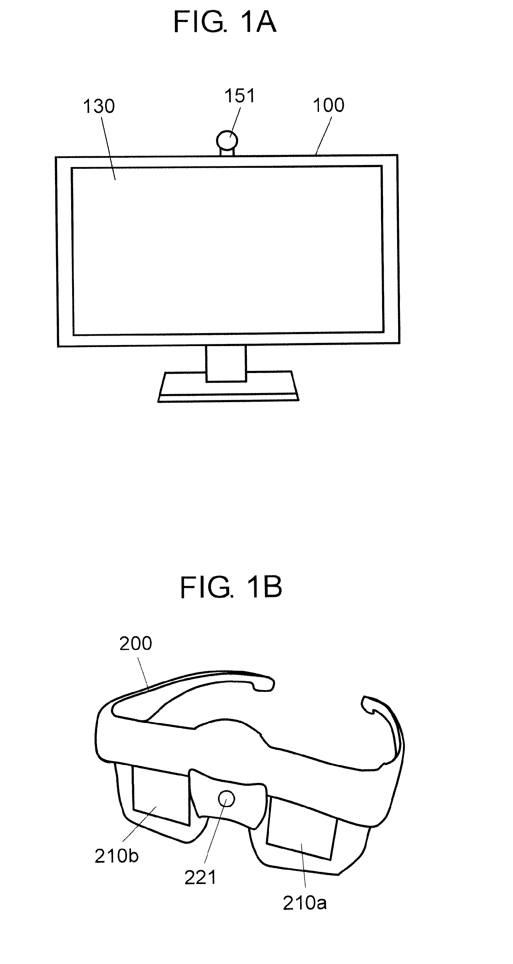

FIG. 1A is a perspective view showing the appearance of three-dimensional display device 100 composing three-dimensional display system 1 according to the first exemplary embodiment of the present invention. FIG. 1B is a perspective view showing the appearance of shutter glasses 200 composing three-dimensional display system 1 according to the first exemplary embodiment of the present invention.

Three-dimensional display system 1 includes three-dimensional display device 100 and shutter glasses (glasses for viewing stereoscopic images, hereinafter abbreviated as "glasses" in a description of a three-dimensional display system) 200.

Three-dimensional display device 100 includes display unit 130 as a display means and infrared emitting element 151 as a synchronizing signal transmitting means.

Display unit 130 can alternately display a left-eye image (hereinafter, abbreviated as "L image") and a right-eye image (hereinafter, abbreviated as "R image"). Further, infrared emitting element 151 can transmit to glasses 200 a synchronizing signal (hereinafter, abbreviated as "shutter switching synchronizing signal") indicating a timing for switching the shutters of glasses 200 generated according to a synchronizing signal (hereinafter, abbreviated as "V synchronizing signal") indicating a timing of starting to display L and R images (hereinafter, abbreviated as "image").

Glasses 200 include left-eye shutter (hereinafter, abbreviated as "left shutter") 210a, right-eye shutter (hereinafter, abbreviated as "right shutter") 210b, and infrared receiving element 221.

Glasses 200 receive a shutter switching synchronizing signal transmitted via infrared rays from infrared emitting element 151 of three-dimensional display device 100, with infrared receiving element 221, to control light entering the left and right eyes with left shutter 210a and right shutter 210b, respectively, synchronously with an image displayed on three-dimensional display device 100.

Left shutter 210a and right shutter 210b each include an optical filter (not shown) to control ON (transmitting) and OFF (blocking) of light entering, according to a signal received by infrared receiving element 221. Here, L and R images have display information different from each other by the parallax between the left and right eyes. A viewer views images through glasses 200 with their left shutter 210a and right shutter 210b opened and closed synchronously with images to be displayed to perceive images displayed by three-dimensional display device 100 as stereoscopic images.

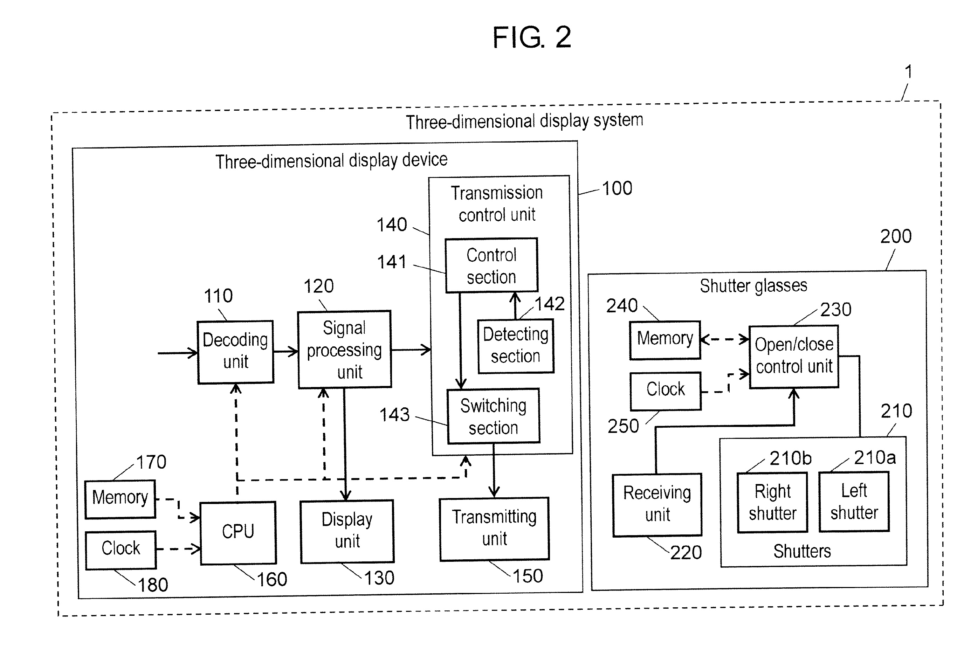

Next, a description is made of detailed configuration and functions of three-dimensional display device 100 and glasses 200 using FIG. 2.

FIG. 2 is a block diagram showing the main hardware configuration of three-dimensional display system 1 according to the first exemplary embodiment of the present invention.

Three-dimensional display device 100 includes decoding unit 110, signal processing unit 120, transmission control unit 140 for controlling transmission of a shutter switching synchronizing signal, CPU 160, memory 170, clock 180, display unit 130 for displaying images, and transmitting unit 150 for transmitting a shutter switching synchronizing signal.

Decoding unit 110 decodes a coded image signal being input and outputs the image data in a given format. To code images, a method is used such as MPEG (Motion Picture Experts Group)-2, MPEG-4, and H264.

Signal processing unit 120 performs signal processing for displaying image data received from decoding unit 110 as stereoscopic images. Concretely, unit 120 extracts or generates L and R images from images decoded by decoding unit 110, and then outputs the L and R images extracted or decoded to display unit 130 temporally alternately. Further, unit 120 generates an output signal including a V synchronizing signal and transmits the output signal to display unit 130.

Transmission control unit 140, which includes control section 141, detecting section 142, and switching section 143, generates a shutter switching synchronizing signal based on a V synchronizing signal generated by signal processing unit 120 and outputs the resulting signal to transmitting unit 150.

Control section 141 outputs a control signal for implementing the following two functions. One is transmitting a shutter switching synchronizing signal for controlling open/close of shutters 210 of glasses 200 intermittently at a given transmission timing, according to image information output from signal processing unit 120 to display unit 130 (direction of shutter switching). The other is changing the given transmission timing according to a given condition and transmitting the shutter switching synchronizing signal.

Detecting section 142, which is a means for detecting a factor for changing a given transmission timing of a shutter switching synchronizing signal transmitted by transmitting unit 150, informs control section 141 of transmission timing change information when detecting a factor for changing the transmission timing.

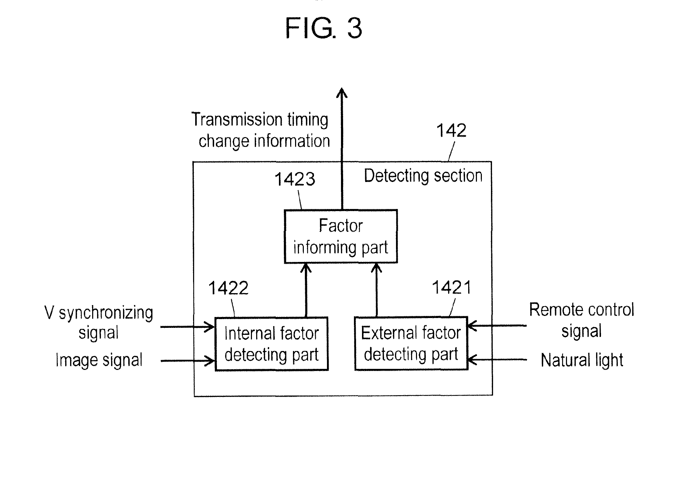

As shown in FIG. 3, detecting section 142 includes external factor detecting part 1421 for detecting an external factor (e.g. reception of a remote control signal, a change in the intensity of ambient illumination) for changing the given transmission timing of the shutter switching synchronizing signal; and internal factor detecting part 1422 for detecting an internal factor (e.g. fluctuation of a V synchronizing signal, scene change presumed from an image signal) for changing the given transmission timing of the shutter switching synchronizing signal.

Detecting section 142 further includes factor informing part 1423 for informing control section 141 of a factor detected by external factor detecting part 1421 or internal factor detecting part 1422 as transmission timing change information. Here, detecting section 142 may include only one of external factor detecting part 1421 and internal factor detecting part 1422.

Switching section 143 generates a shutter switching synchronizing signal that directs switching of shutters 210 of glasses 200 according to a control signal from control section 141 and outputs the shutter switching synchronizing signal to transmitting unit 150.

CPU 160 exercises overall control on three-dimensional display device 100 on the basis of an input signal from the outside according to a program stored in memory 170.

Memory 170 stores programs executed by CPU 160 and data required for executing a program. Memory 170 is implemented by a general-purpose storage element such as a RAM (random access memory) and ROM (read only memory).

Clock 180 supplies a clock signal for the operation base of three-dimensional display device 100.

Transmitting unit 150, which includes infrared emitting element 151, converts a shutter switching synchronizing signal output from transmission control unit 140 to an infrared signal and transmits the infrared signal to glasses 200. Herewith, transmitting unit 150 directs glasses 200 to switch open/close of left shutter 210a and right shutter 210b.

Display unit 130 displays images output from signal processing unit 120. Unit 130 is implemented by a display device such as a CRT, liquid crystal display (LCD) panel, plasma display panel (PDP), and organic EL.

Meanwhile, glasses 200 include left shutter 210a, right shutter 210b, receiving unit 220 for receiving a shutter switching synchronizing signal transmitted from three-dimensional display device 100, open/close control unit 230 for controlling open/close of shutters 210, memory 240, and clock 250.

Receiving unit 220 includes infrared receiving element 221 to receive a shutter switching synchronizing signal transmitted from infrared emitting element 151 of three-dimensional display device 100.

Open/close control unit 230 outputs open/close directions of left shutter 210a and right shutter 210b according to a shutter switching synchronizing signal received by receiving unit 220.

Left shutter 210a and right shutter 210b are respectively disposed at positions corresponding to the user's left and right eyes when the user wears glasses 200. Each of shutters 210a and 210b includes an optical filter (not shown) for controlling the transmission amount of light so as to synchronize ON (transmit) and OFF (block) of light entering the user's left and right eyes with images displayed on display unit 130, according to open/close directions from open/close control unit 230, thereby allowing the user to view intended stereoscopic images.

Memory 240 stores programs executed by CPU 160 and data required for executing a program.

Clock 250 supplies a clock signal for the operation base of glasses 200.

In the first exemplary embodiment of the present invention, transmission and reception of signals between three-dimensional display device 100 and glasses 200 are performed through infrared rays, but another means may be used such as wired, wireless (not infrared), and ultrasonic.

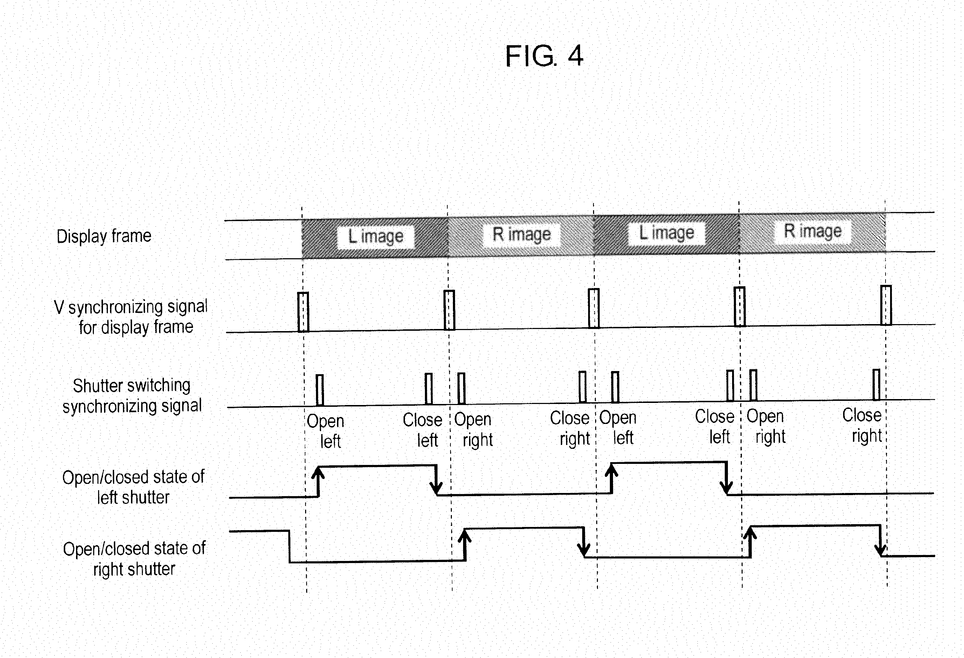

Next, a description is made of shutter switching direction in three-dimensional display system 1 using FIG. 4.

In the following description of shutter switching direction, three-dimensional display device 100 is assumed to transmit a shutter switching synchronizing signal always at a timing of switching L and R image display for switching control of shutters 210 of glasses 200.

FIG. 4 is a timing diagram showing open/close operation of the shutters in three-dimensional display system 1 according to the first embodiment of the present invention.

As shown in FIG. 4, control section 141 of transmission control unit 140 transmits a control signal to switching section 143 according to a V synchronizing signal for a display frame of each image detected when L and R images are alternately displayed on display unit 130 of three-dimensional display device 100. Switching section 143 generates a shutter switching synchronizing signal according to a V synchronizing signal transmitted from control section 141 and outputs the shutter switching synchronizing signal to transmitting unit 150. Herewith, control section 141 executes switching control of left shutter 210a and right shutter 210b of glasses 200 through transmitting unit 150.

When an L image is displayed for example, a shutter switching synchronizing signal is transmitted that directs opening of left shutter 210a of glasses 200 and closing of right shutter 210b, from three-dimensional display device 100 to glasses 200.

Glasses 200 open (transmitting state) left shutter 210a of glasses 200 and close (blocking state) right shutter 210b according to the shutter switching synchronizing signal received.

Consequently, the user views the L image only with the left eye when the L image is displayed on display unit 130.

In the same way, when an a R image is displayed, a shutter switching synchronizing signal is transmitted that directs opening of right shutter 210b of glasses 200 and closing of left shutter 210a, from three-dimensional display device 100 to glasses 200.

Glasses 200 open (transmitting state) right shutter 210b of glasses 200 and close (blocking state) left shutter 210a according to the shutter switching synchronizing signal received.

Consequently, the user views the R image only with the right eye when the R image is displayed on display unit 130.

Here, when left and right shutters 210 are opened and closed in accordance with a display switching timing of left and right parallax images, the persistence of vision effect generates a crosstalk (an L image leaks into an R image, and vice versa). To prevent the crosstalk, a shutter switching synchronizing signal is generated so that a period during which left shutter 210a or right shutter 210b is opened is shorter than a period during which an L image or R image is displayed, as shown in FIG. 4. Meanwhile, the length of the period of a crosstalk varies depending on whether a display image is a bright or dark scene (a long period for a bright scene; short for dark), and thus a shutter switching synchronizing signal may be changed according to a scene (scene adaptive).

From then, left shutter 210a and right shutter 210b of glasses 200 are switched synchronously with a timing of switching L and R image display in the same procedure, which allows the user to stereoscopically view images displayed on display unit 130 through glasses 200.

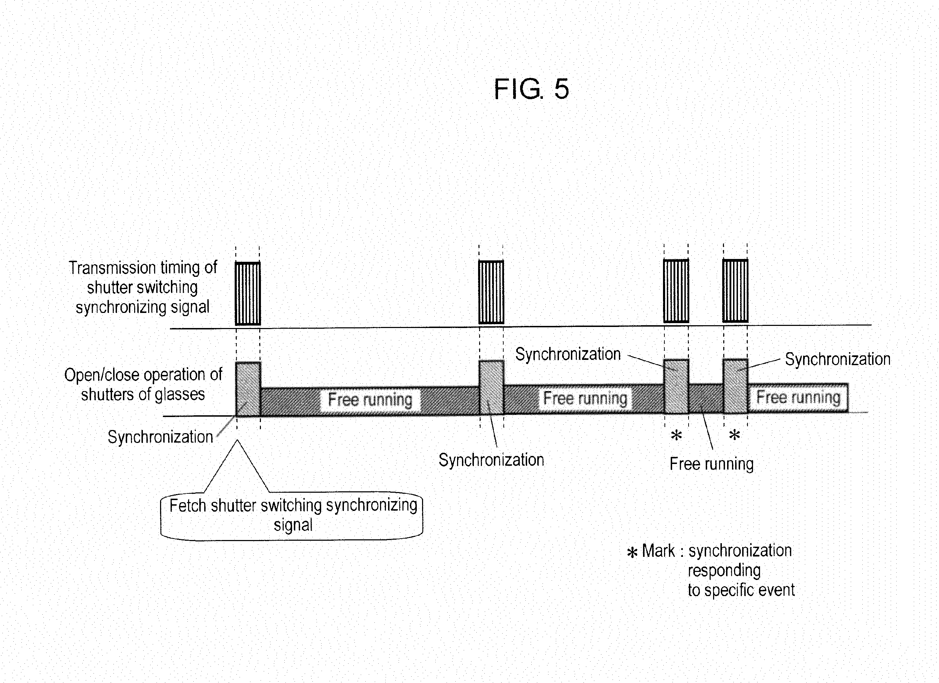

Next, a description is made of transmission timing change function in which a transmission timing of a shutter switching synchronizing signal is changed in three-dimensional display system 1 using FIG. 5.

In the following description of the transmission timing change function, three-dimensional display device 100 is assumed to transmit shutter switching synchronizing signals intermittently at a given transmission timing (a timing when display switching of L and R images has been executed N times (N > 1)). While a shutter switching synchronizing signal is not being received from three-dimensional display device 100, glasses 200 are assumed to open and close shutters 210 automatically (hereinafter, abbreviated as "free running") according to a shutter switching synchronizing signal that has been received and stored.

FIG. 5 is a timing diagram showing synchronous control in three-dimensional display system 1 according to the first exemplary embodiment of the present invention.

In glasses 200, during a free-running period in which synchronization between display switching of images and open/close of the shutters of glasses is maintained according to a shutter switching synchronizing signal received, image display switching of three-dimensional display device 100 can be in out-of-synchronization with open/close of the shutters of glasses 200 due to a factor such as fluctuation of a V synchronizing signal. A large out-of-synchronization causes disorder in L and R images viewed through glasses 200, resulting in quality deterioration of three-dimensional display images and viewing problems. Further, a scene change during a free-running period causes the crosstalk characteristics to be changed, resulting in a noticeable crosstalk.

Three-dimensional display system 1 preliminarily specifies an event such as fluctuation of a V synchronizing signal and a change in the crosstalk characteristics and exercises control according to the event to prevent quality deterioration of three-dimensional display images.

As shown in FIG. 5, after synchronous control on three-dimensional display device 100 is started, when a shutter switching synchronizing signal is transmitted for the first time, glasses 200 fetch the shutter switching synchronizing signal for switching control of the shutters, and after that glasses 200 basically repeat the cycle of free running and fetch of a shutter switching synchronizing signal at a given timing (hereinafter, abbreviated as "synchronization cycle").

In three-dimensional display system 1, however, three-dimensional display device 100 changes the given transmission timing when a given condition is satisfied and transmits the shutter switching synchronizing signal. Here, "a given condition is satisfied" means that a specific event preliminarily set (hereinafter, abbreviated as "specific event") has occurred.

As indicated with an * mark in FIG. 5, when a given condition is satisfied, device 100 changes the given transmission timing and transmits the shutter switching synchronizing signal to resynchronize shutter switching of glasses 200 and to update the synchronization cycle.

Examples of a specific event include switching from 2D display to 3D display; switching of an image source displayed such as switching of the channel; a factor of out-of-synchronization such as frequency fluctuation of a V synchronizing signal for an image displayed; scene change presumed from a change in the average intensity of illumination of images displayed; a change in the crosstalk characteristics presumed from the degree of an illumination edge of images; completion of adjusting the display characteristics of three-dimensional display device 100; a factor causing a change in optimum shutter open time due to such as a change in the intensity of ambient illumination determined by a value detected by an illumination sensor for detecting the intensity of natural light; and detection of a signal interfering with a shutter switching synchronizing signal.

When a specific event occurs, transmission control unit 140 of three-dimensional display device 100 controls transmitting unit 150 so that a shutter switching synchronizing signal is transmitted at an appropriate timing different from a given transmission timing.

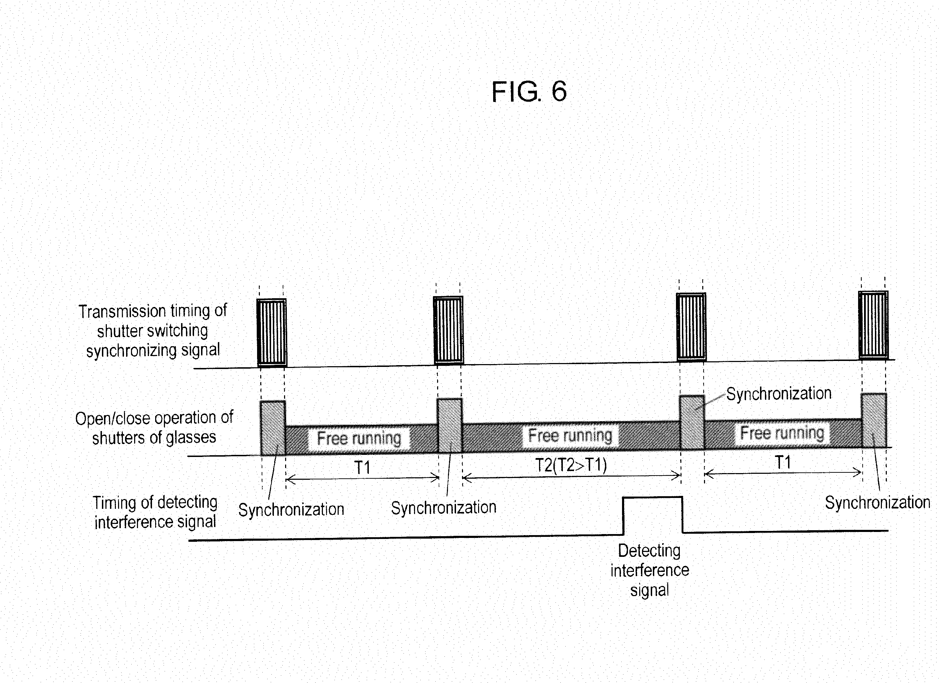

Transmission control unit 140 of three-dimensional display device 100 controls transmitting unit 150 so that a shutter switching synchronizing signal is not transmitted even at a given transmission timing while detecting section 142 is detecting a signal (e.g. a radio wave caused by communications between three-dimensional display device 100 and another device) interfering with the shutter switching synchronizing signal. At a timing when the signal interfering ceases to be detected, unit 140 controls transmitting unit 150 so that the shutter switching synchronizing signal is transmitted. Consequently, as exemplified in FIG. 6, a free-running period of open/close of the shutters of glasses 200 can be longer (T2) than a given period (T1) due to detection of an interference signal.

Next, a description is made of a method of synchronous control between display switching of images and shutter switching of the glasses in three-dimensional display system 1.

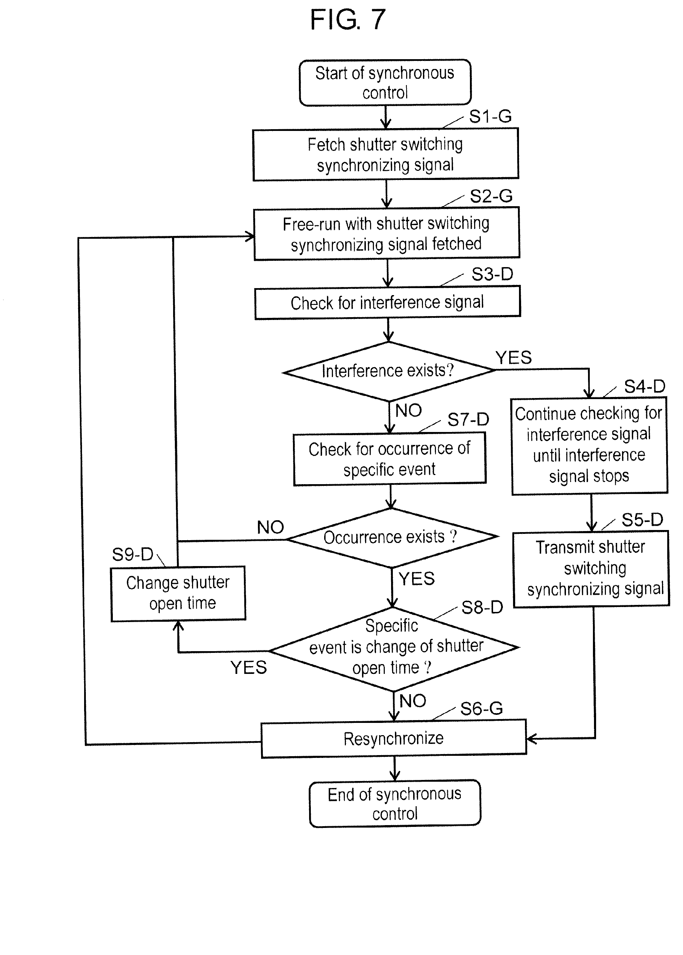

FIG. 7 is a flowchart showing synchronous control according to the first exemplary embodiment of the present invention.

Three-dimensional display device 100, by first transmitting a shutter switching synchronizing signal to glasses 200, starts synchronous control.

In the following description, "Sx-*", D represents operation of three-dimensional display device 100 when * is described as D; G represents operation of glasses 200 when * is described as G.

In step 1 (S1-G), glasses 200 fetch a shutter switching synchronizing signal transmitted from three-dimensional display device 100, and the process flow proceeds to step 2 (S2-G).

In step 2 (S2-G), glasses 200 start free running according to the shutter switching synchronizing signal fetched in step S1 (S1-G), and the process flow proceeds to step 3 (S3-D).

In step 3 (S3-D), three-dimensional display device 100 compares the strength of a signal that can interfere with the shutter switching synchronizing signal to a predetermined threshold to check for an interference signal. If an interference exists, the process flow proceeds to step 4 (S4-D); otherwise, to step 7 (S7-D).

In step 4 (S4-D), device 100 continues checking for the interference signal. If the interference stops, the process flow proceeds to step 5 (S5-D).

In step 5 (S5-D), device 100 transmits the shutter switching synchronizing signal to glasses 200, and the process flow proceeds to step 6 (S6-G).

In step 6 (S6-G), glasses 200 resynchronize shutter switching according to the shutter switching synchronizing signal transmitted from device 100, and the process flow proceeds to step 2 (S2-G).

In step 7 (S7-D), if determined as no interference signal exists in step 3 (S3-D), device 100 checks for occurrence of a specific event (e.g. switching of an input source, a change in the crosstalk characteristics) that is a factor of out-of-synchronization and changing of shutter open time. If a specific event is occurring, the process flow proceeds to step 8 (S8-D); otherwise, to step 2 (S2-G) to continue free running of glasses 200.

In step 8 (S8-D), device 100 determines whether or not the specific event that has occurred is changing of shutter open time. If changing of shutter open time, the process flow proceeds to step 9 (S9-D); otherwise, to step 6 (S6-G) to resynchronize glasses 200.

In step 9 (S9-D), device 100 transmits the shutter switching synchronizing signal for changing open time of shutters 210 to a given value, to glasses 200, and the process flow proceeds to step 2 (S2-G), where glasses 200 start free running according to the new shutter switching synchronizing signal.

In the first exemplary embodiment of the present invention, it is obvious that checking for an interference signal and for occurrence of a specific event (shown in FIG. 7) may be exchanged in order or performed concurrently.

In a three-dimensional display system in which glasses free-run as in the present invention, possible factors of out-of-synchronization include a fact that a V synchronizing signal (a reference for a shutter switching synchronizing signal) contains a fluctuation component such as line jitter and frequency fluctuation. The fluctuation of a V synchronizing signal is caused by signal processing by the three-dimensional display device, such as synchronous (CLK) crossover, synchronous protection, resizing, and frame rate conversion (FRC).

Hence, in the present invention, a phase tracking technique by commonly known PLL (phase-locked loop) may be used to stabilize the frequency of a synchronizing signal required for free-running glasses, where frequency fluctuation of a synchronizing signal required for free-running glasses is microminiaturized and synchronization is performed near the center of the frequency of a V synchronizing signal for images to maintain tracking. Further, tracking may be recovered by the following way. That is, fluctuation of a V synchronizing signal for images is detected. When frequency fluctuation or the phase difference exceeds a threshold due to such as switching of an input source of images, the glasses reset locking of PLL and stop free running, and then resynchronization is performed using a shutter switching synchronizing signal transmitted from the three-dimensional display device.

As described hereinbefore, a three-dimensional display device, three-dimensional display method, and three-dimensional display system of the present invention prevent interference with a shutter switching synchronizing signal due to a signal for communicating with another device (e.g. remote control, wireless headphones). Further, when a specific event (e.g. switching from 2D display to 3D display, switching of an image source, frequency fluctuation of a V synchronizing signal, scene change, completion of adjusting the display characteristics of the three-dimensional display device, a change in the intensity of ambient illumination) occurs, a shutter switching synchronizing signal is transmitted to stably maintain synchronization between display switching of images on the three-dimensional display device and shutter switching of the shutter glasses even for intermittent transmission of a shutter switching synchronizing signal. Hence, the present invention provides high-quality three-dimensional display to a user.

### INDUSTRIAL APPLICABILITY

A three-dimensional display device, three-dimensional display method, and three-dimensional display system of the present invention include a display device alternately displaying left- and right-eye images, applicable to a three-dimensional display system that enables viewing stereoscopic images and to a three-dimensional display device used in the system.

### REFERENCE MARKS IN THE DRAWINGS

- 1: Three-dimensional display system
- 100: Three-dimensional display device
- 110: Decoding unit
- 120: Signal processing unit
- 130: Display unit
- 140: Transmission control unit
- 141: Control section
- 142: Detecting section
- 1421: External factor detecting part
- 1422: Internal factor detecting part
- 1423: Factor informing part
- 143: Switching unit
- 150: Transmitting unit
- 151: Infrared emitting element
- 160: CPU
- 170, 240: Memory
- 180, 250: Clock
- 200: Shutter glasses
- 210: Shutters
- 210a: Left-eye shutter
- 210b: Right-eye shutter
- 220: Receiving unit
- 221: Infrared receiving element
- 230: Open/close control unit

## Claims

1. A three-dimensional display device comprising:
a display means for alternately displaying left- and right-eye images; and
a synchronizing signal transmitting unit for intermittently transmitting a synchronizing signal indicating a display start timing to the display means at a given transmission timing,
wherein the synchronizing signal transmitting unit changes the given transmission timing according to a given condition and transmits the synchronizing signal.

2. The three-dimensional display device according to claim 1, wherein the synchronizing signal transmitting unit transmits the synchronizing signal not even at the given transmission timing in any one case of switching from 2D display to 3D display, switching of an image source displayed on the display means, scene change of an image displayed on the display means, frequency fluctuation of a V synchronizing signal of an image displayed on the display means, and completion of adjusting the display characteristics of the display means.

3. The three-dimensional display device according to claim 1, wherein the synchronizing signal transmitting unit transmits the synchronizing signal not even at the given transmission timing when the given condition is a change in an intensity of ambient illumination.

4. The three-dimensional display device of any one according to claims 1 through 3, further comprising an interference signal detecting section for detecting a signal interfering with the synchronizing signal transmitted by the synchronizing signal transmitting unit,
wherein the synchronizing signal transmitting unit does not transmit the synchronizing signal even at the given transmission timing when the given condition is that the interference signal detecting section is detecting a signal interfering with the synchronizing signal.

5. A three-dimensional display system comprising:
a three-dimensional display device including:
a display means for alternately displaying left- and right-eye images; and
a synchronizing signal transmitting unit for intermittently transmitting a synchronizing signal indicating a display start timing to the display means at a given transmission timing,
wherein the synchronizing signal transmitting unit changes the given transmission timing according to a given condition and transmits the synchronizing signal; and
shutter glasses including:
a left-eye shutter to be opened or closed for transmitting an image displayed on the display means to a left eye or for blocking the image;
a right-eye shutter to be opened or closed for transmitting an image displayed on the display means to a right eye or for blocking the image;
a synchronizing signal receiving unit for receiving the synchronizing signal; and
a shutter controlling unit for starting to open and close at given intervals the left-eye shutter and the right-eye shutter at a timing when the synchronizing signal receiving unit receives the synchronizing signal.

6. A three-dimensional display method comprising:
a parallax image displaying step alternately displaying left- and right-eye images on a display means; and
a synchronizing signal transmitting step changing a given transmission timing according to a given condition when transmitting a synchronizing signal indicating a timing for starting to display the left-eye image or the right-eye image on the display means intermittently at a given transmission timing and transmitting the synchronizing signal.

7. The three-dimensional display method according to claim 6,
wherein the synchronizing signal transmitting step transmits the synchronizing signal not even at the given transmission timing in any case of switching from 2D display to 3D display, switching of an image source displayed on the display means, scene change of an image displayed on the display means, frequency fluctuation of a V synchronizing signal of an image displayed on the display means, and completion of adjusting display characteristics of the display means.

8. The three-dimensional display method according to claim 6, wherein the synchronizing signal transmitting step transmits the synchronizing signal not even at the given transmission timing when the given condition is a change in an intensity of ambient illumination.

9. The three-dimensional display method of any one according to claims 6 through 8, further comprising an interference signal detecting step detecting a signal interfering with the synchronizing signal, wherein the synchronizing signal transmitting step does not transmit the synchronizing signal even at the given transmission timing when the given condition is that a signal interfering with the synchronizing signal continues to be detected in the interference signal detecting step.
